(19) Europäisches Patentamt
European Patent Office
Office européen des brevets

(11) **EP 4 407 705 A1**

(12) **EUROPEAN PATENT APPLICATION**

(43) Date of publication:
**31.07.2024 Bulletin 2024/31**

(21) Application number: **24152704.3**

(22) Date of filing: **18.01.2024**

(51) International Patent Classification (IPC):
**H01M 4/13** (2010.01)   **H01M 4/62** (2006.01)
**H01M 10/42** (2006.01)   **H01M 10/0525** (2010.01)
**H01M 4/02** (2006.01)

(52) Cooperative Patent Classification (CPC):
**H01M 4/13; H01M 4/62; H01M 10/4235;**
C08K 2201/005; C08K 2201/006; H01M 10/0525;
H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.01.2023  JP 2023005601**

(71) Applicant: **Samsung SDI Co., Ltd.**
**Yongin-si, Gyeonggi-do 17084 (KR)**

(72) Inventors:
• **BAEK, Jinseok**
  **Yokohama-shi (JP)**
• **INUI, Kunihiro**
  **Yokohama-shi (JP)**

(74) Representative: **Marks & Clerk LLP**
**15 Fetter Lane**
**London EC4A 1BW (GB)**

(54) **COMPOSITE PARTICLES FOR RECHARGEABLE BATTERY AND RECHARGEABLE BATTERY INCLUDING SAME**

(57)   Provided are composite particles for a non-aqueous electrolyte rechargeable battery that can sufficiently suppress the rise in the internal temperature of the battery even under environments where the internal temperature is likely to rise.

## FIG. 1

**Description**

## BACKGROUND OF THE INVENTION

**(a) Field of the Invention**

This disclosure relates to composite particles for a non-aqueous electrolyte rechargeable battery and a non-aqueous electrolyte rechargeable battery including the same.

**(b) Description of the Related Art**

Non-aqueous electrolyte rechargeable batteries including rechargeable lithium ion batteries are widely used as power sources for smart phones, notebook computers, and the like, and recently are also used for large-sized batteries such as those for vehicles.

On the other hand, the rechargeable lithium ion batteries have advantages of high energy density, but since they use non-aqueous electrolytes, sufficient measures are required for safety. Also, with the recent increase in the size of batteries, securing safety has become more important.

For example, when a rechargeable lithium ion battery is placed in a high-temperature environment, there is a possibility that the positive electrode of the rechargeable lithium ion battery generates heat, or heat is generated due to an oxidative decomposition reaction of the electrolyte caused by oxygen radicals generated from the positive electrode, causing an increase in the internal temperature of the battery.

If the internal temperature of the battery becomes very high due to such causes, a short circuit due to shrinkage of the separator provided in the rechargeable lithium ion battery is likely to occur, and there is a risk that the internal temperature of the battery will gradually rise.

Accordingly, as a method of ensuring safety by suppressing an internal temperature rise of a rechargeable lithium ion battery, it has been proposed to incorporate a binder including a radical scavenging agent such as phosphate ester with radical trapping ability into the positive electrode (Patent Document 1, Japanese Patent Publication No. 2011-159484) or incorporate endothermic particles made of a metal hydroxide with endothermic properties (Patent Document 2, Japanese Patent Publication No. 2016-162528 and Patent Document 3, Japanese Patent Publication No. 2011-258481).

## SUMMARY OF THE INVENTION

However, according to the present inventors' examination, an internal temperature of the battery cannot be sufficiently suppressed simply by incorporating the radical scavenger described in Patent Document 1 and the inorganic particles described in Patent Documents 2 and 3 alone into a non-aqueous electrolyte rechargeable battery such as a rechargeable lithium ion battery.

In addition, the present inventors also realize that the cycle characteristics of the battery may deteriorate by adding heat suppressing additives such as endothermic particles or radical scavengers as described above.

The present invention has been made in view of the above-mentioned problems, and its purpose is to provide composite particles for non-aqueous electrolyte rechargeable batteries that can sufficiently suppress an increase in an internal temperature of a battery and suppress a decline in battery performance such as cycle characteristics.

That is, the present invention includes the following configurations.

[1] Composite particles for a non-aqueous electrolyte rechargeable battery including a metal hydroxide and a flame retardant,
wherein an amount of desorbed $P_2$ (MS1) of the composite particles from about 80 °C to about 1400 °C by thermal desorption gas mass spectrometry (TDS-MS) is greater than or equal to about $200 \times 10^{-6}$ mol/g and less than or equal to about $2500 \times 10^{-6}$ mol/g, an amount of desorbed $H_2O$ (MS2) from about 80 °C to about 200 °C by TDS-MS of the composite particles is greater than or equal to about $50 \times 10^{-6}$ mol/g and less than or equal to about $1000 \times 10^{-6}$ mol/g, and an integrated value of 50% ($D_{50}$) of the volume-based particle size distribution of the composite particles is greater than or equal to about 0.1 $\mu$m and less than or equal to about 8 $\mu$m.
[2] The composite particles for a non-aqueous electrolyte rechargeable battery described in [1], wherein the specific surface area (BET) of the composite particle calculated by an adsorption isotherm measured by adsorbing nitrogen to the composite particle is greater than or equal to about 8 $m^2$/g and less than or equal to about 80 $m^2$/g.
[3] The composite particles for a non-aqueous electrolyte rechargeable battery described in [1] or [2], wherein a ratio of the amounts of desorbed gases satisfies Formula (1):

$$0.5 \leq (MS1/MS2) \leq 10.0 \ldots (1).$$

[4] The composite particles for a non-aqueous electrolyte rechargeable battery described in any one of [1] to [3], wherein the metal hydroxide is at least one selected from aluminium hydroxide, pseudo-boehmite, boehmite, alumina, and kaolinite, and a surface and an interior of the metal hydroxide are modified with a flame retardant.

[5] The composite particles for a non-aqueous electrolyte rechargeable battery described in any one of [1] to [4], wherein the flame retardant includes at least one of phosphoric acid, phosphoric acid ester, phosphonic acid, or phosphinic acid.

[6] The composite particles for a non-aqueous electrolyte rechargeable battery described in any one of [1] to [5], wherein a content of an aluminium element is about 1 mass% to 50 mass% and a content of a phosphorus element is about 1 mass% to about 50 mass% as determined by inductively coupled plasma emission spectroscopy (ICP-AES).

[7] The composite particles for a non-aqueous electrolyte rechargeable battery described in any one of [1] to [6], wherein in the composite particles, an amount of desorbed $CH_4$ (MS3) from about 80 °C to about 1400 °C by TDS-MS is greater than or equal to about $30 \times 10^{-6}$ mol/g and less than or equal to about $500 \times 10^{-6}$ mol/g, and in the composite particles, an amount of desorbed CHsOH (MS4) from about 80 °C to about 1400 °C by TDS-MS is greater than or equal to about $500 \times 10^{-6}$ mol/g and less than or equal to about $3000 \times 10^{-6}$ mol/g.

[8] The composite particles for a non-aqueous electrolyte rechargeable battery described in any one of [1] to [7], wherein an amount of desorbed $C_6H_6$ (MS5) from about 80 °C to about 1400 °C by TDS-MS is greater than or equal to about $100 \times 10^{-6}$ mol/g and less than or equal to about $3000 \times 10^{-6}$ mol/g.

[9] The composite particles for a non-aqueous electrolyte rechargeable battery described in any one of [1] to [8], wherein the metal hydroxide has a $D_{50}$ value greater than or equal to about 10 nm and less than or equal to about 10 μm.

[10] The composite particles for a non-aqueous electrolyte rechargeable battery described in any one of [1] to [9], wherein an amount of the metal hydroxide is greater than or equal to about 1 mass% and less than or equal to about 50 mass%, based on a total weight of the composite particles.

[11] The composite particles for a non-aqueous electrolyte rechargeable battery described in any one of [1] to [10], wherein an amount of the flame retardant is greater than or equal to about 0.1 mass% and less than or equal to about 90 mass%, based on a total weight of the composite particles.

[12] A positive electrode for a non-aqueous electrolyte rechargeable battery, comprising a positive electrode current collector and a positive electrode mixture layer on the positive electrode current collector, wherein the positive electrode mixture layer includes a positive electrode active material and the composite particles as described in any one of [1] to [11].

[13] A non-aqueous electrolyte rechargeable battery comprising a positive electrode, a negative electrode, a separator, and a non-aqueous electrolyte, wherein the positive electrode is the positive electrode for the non-aqueous electrolyte rechargeable battery described in [12].

[14] The non-aqueous electrolyte rechargeable battery as described in [13], wherein an amount of the composite particles is greater than or equal to about 0.1 mass% and less than or equal to about 3.0 mass%, based on a total weight of the non-aqueous electrolyte rechargeable battery.

[15] A method of preparing composite particles for a non-aqueous electrolyte rechargeable battery, including the process of mixing raw materials of metal hydroxide particles and a flame retardant and heating them.

At least some of the above and other features of the invention are set out in the claims.

Because the composite particles for non-aqueous electrolyte rechargeable batteries configured in this way not only have both the radical trapping ability due to the flame retardant (e.g. phosphoric acid compound) and the endothermic ability due to the metal hydroxide, but they also have the optimal particle diameter when made of composite particles, it is possible to sufficiently suppress the increase in internal temperature in the non-aqueous electrolyte rechargeable battery and suppress the decline in battery performance.

## BRIEF DESCRIPTION OF THE DRAWINGS

FIG. 1 is a schematic view showing a structure of a composite particle according to some embodiments.
FIG. 2 is a graph showing capacity retention rates of battery cells according to Example 6 and Comparative Examples 1, 3, and 4.
FIG. 3 is a graph showing the effect of suppressing positive electrode heat generation in Example 6 and Comparative Examples 1, 3, and 4.

## DETAILED DESCRIPTION OF THE EMBODIMENTS

Hereinafter, embodiments will be described in detail so that those of ordinary skill in the art can easily implement them. However, this disclosure may be embodied in many different forms and is not construed as limited to the example embodiments set forth herein.

The terminology used herein is used to describe embodiments, and is not intended to limit the present invention. The singular expression includes the plural expression unless the context clearly dictates otherwise.

As used herein, "combination thereof" means a mixture, laminate, composite, copolymer, alloy, blend, reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the particle diameter may be an average particle diameter and the average particle diameter may be measured by a method well known to those skilled in the art, for example, may be measured by a particle size analyzer, or may be measured by a transmission electron microscopic image or a scanning electron microscopic image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter ($D_{50}$) of particles having a cumulative volume of 50 volume% in the particle size distribution. As used herein, when a definition is not otherwise provided, the average particle diameter means a diameter ($D_{50}$) of particles having a cumulative volume of 50 volume% in the particle size distribution that is obtained by measuring the size (diameter or length of the long axis) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

Hereinafter, a configuration of a non-aqueous electrolyte rechargeable battery according to an embodiment will be described.

<1. Basic Configuration of Non-aqueous Electrolyte Rechargeable Battery>

The non-aqueous electrolyte rechargeable battery according to this embodiment is a rechargeable lithium ion battery equipped with a positive electrode, a negative electrode, a separator, and a non-aqueous electrolyte.

The shape of the rechargeable lithium ion battery is not particularly limited, and may be, for example, cylindrical, square, laminate, or button.

(1-1. Positive Electrode)

The positive electrode includes a positive electrode current collector and a positive electrode mixture layer on the positive electrode current collector.

The positive electrode current collector may be any material as long as it is a conductor, and is, for example, plate-shaped or thin, and may be made of aluminium, stainless steel, nickel coated steel, or the like.

The positive electrode mixture layer may include at least a positive electrode active material, and may further include a conductive agent and a positive electrode binder.

The positive electrode active material may be, for example, a transition metal oxide or a solid solution oxide including lithium, and is not particularly limited as long as it is a material that can electrochemically intercalate and deintercalate lithium ions. Examples of the transition metal oxide including lithium may include $Li_{1.0}Ni_{0.88}Co_{0.1}Al_{0.01}Mg_{0.01}O_2$, etc. In addition, Li·Co composite oxides such as $LiCoO_2$ and Li·Ni·Co·Mn-based composite oxides such as $LiNi_xCo_yMn_zO_2$, Li-Ni-based composite oxide such as $LiNiO_2$, or Li-Mn-based composite oxides such as $LiMn_2O_4$, and the like are examples of the transition metal oxide including lithium. Examples of the solid solution

oxide may include $Li_aMn_xCo_yNi_zO_2$ $(1.150 \leq a \leq 1.430, 0.45 \leq x \leq 0.6, 0.10 \leq y \leq 0.15, 0.20 \leq z \leq 0.28)$, or $LiMn_{1.5}Ni_{0.5}O_4$. On the other hand, a content (content ratio) of the positive electrode active material is not particularly limited, as long as it is applicable to the positive electrode mixture layer of a non-aqueous electrolyte rechargeable battery. Moreover, these compounds may be used alone or may be used in mixture of plural types.

The conductive agent is not particularly limited as long as it is for increasing the conductivity of the positive electrode. Examples of the conductive agent may include those including at least one selected from among carbon black, natural graphite, artificial graphite, fibrous carbon, and sheet-like carbon. Examples of the carbon black may include furnace black, channel black, thermal black, ketjen black, and acetylene black.

Examples of the fibrous carbon may include carbon nanotubes and carbon nanofibers, and examples of the sheet-like carbon include graphene and the like.

A content of the conductive agent in the positive electrode mixture layer is not particularly limited, but may be greater than or equal to about 0.1 mass% and less than or equal to about 5 mass%, greater than or equal to about 0.5 mass% and less than or equal to about 3 mass% based on the total amount of the positive electrode mixture layer, from the viewpoint of achieving both conductivity and battery capacity.

The positive electrode binder may include, for example, a fluoro-containing resin such as polyvinylidene fluoride, an ethylene-containing resin such as styrene-butadiene rubber, an ethylene-propylene diene terpolymer, an acrylonitrile-butadiene rubber, a fluoro rubber, polyvinyl acetate, polymethylmethacrylate, polyethylene, polyvinyl alcohol, carboxymethyl cellulose, a carboxymethyl cellulose derivative (a salt of carboxymethyl cellulose, etc.), nitrocellulose, and the like. The positive electrode binder may be any material capable of binding the positive electrode active material and the conductive agent onto the positive electrode current collector, and is not particularly limited.

(1-2. Negative Electrode)

The negative electrode includes a negative current collector and a negative electrode mixture layer on the negative current collector.

The negative current collector may be anything as long as it is a conductor, and may be plate-shaped or thin, and may be made of copper, stainless steel, nickel-plated steel, or the like.

The negative electrode mixture layer may include a negative electrode active material, and may further include a conductive agent and a negative electrode binder.

The negative electrode active material is not particularly limited as long as it can electrochemically intercalate and deintercalate lithium ions, but, may be, for example, a graphite active material (artificial graphite, natural graphite, a mixture of artificial graphite and natural graphite, natural graphite coated with artificial graphite), a Si-based active material, or a Sn-based active material (e.g., a mixture of fine particles of silicon (Si) or tin (Sn) or a mixture of oxides thereof and a graphite active material, particulates of silicon or tin, an alloy including silicon or tin as a base material), metallic lithium, and a titanium oxide compound such as $Li_4Ti_5O_{12}$, lithium nitride, and the like. As the negative electrode active material, one of the above examples may be used, or two or more types may be used in combination. On the other hand, oxides of silicon may be represented by $SiO_x$ $(0 \leq x \leq 2)$.

The conductive agent is not particularly limited as long as it is for increasing the conductivity of the negative electrode, and, for example, the same conductive agent as described in the section of the positive electrode may be used.

A content of the conductive agent in the negative electrode mixture layer is not particularly limited, but may be greater than or equal to about 0.1 mass% and less than or equal to about 5 mass%, or greater than or equal to about 0.5 mass% and less than or equal to about 3 mass% based on the total weight of the negative electrode mixture layer, from the viewpoint of achieving both conductivity and battery capacity.

The negative electrode binder may be one capable of binding the negative electrode active material and the conductive agent on the negative current collector, and is not particularly limited. The negative electrode binder may be, for example, polyvinylidene fluoride (PVDF), polytetrafluoroethylene (PTFE), polyacrylic acid (PAA), a styrene-butadiene-based copolymer (SBR), a metal salt of carboxymethyl cellulose (CMC), etc. The binder may be used alone or may be used in mixture of two or more types.

(1-3. Separator)

The separator is not particularly limited, and any separator may be used as long as it is used as a separator for a rechargeable lithium ion battery. The separator may be a porous film, nonwoven fabric, or the like that exhibits excellent high-rate discharge performance alone or in combination. The resin constituting the separator may be, for example, a polyolefin-based resin such as polyethylene, polypropylene, etc., a polyester resin such as polyethylene terephthalate, polybutylene terephthalate, etc., polyvinylidene difluoride, a vinylidene difluoride-hexafluoropropylene copolymer, a vinylidene difluoride-perfluorovinyl ether copolymer, a vinylidene difluoride-tetrafluoroethylene copolymer, a vinylidene difluoride-trifluoroethylene copolymer, a vinylidene difluoride-hexafluoroacetone copolymer, a vinylidene difluoride-ethylene copolymer, a vinylidene difluoride-propylene copolymer, a vinylidene difluoride-trifluoro propylene copolymer, a vinylidene difluoride-tetrafluoroethylene copolymer, a vinylidene difluoride-ethylene-tetrafluoroethylene copolymer, or the like. On the other hand, a porosity of the separator is not particularly limited, and it is possible to arbitrarily apply a porosity of the separator of a conventional rechargeable lithium ion battery.

The separator may further include a surface layer covering the surface of the porous film or non-woven fabric described above. The surface layer may include an adhesive for immobilizing the battery element by adhering to the electrode. Examples of the adhesive may include a vinylidene fluoride-hexafluoropropylene copolymer, an acid-modified product of vinylidene fluoride polymers, and a styrene-(meth)acrylic acid ester copolymer.

(1-4. Non-aqueous Electrolyte)

As the non-aqueous electrolyte, the same non-aqueous electrolyte that has conventionally been used for rechargeable lithium ion batteries may be used without particular limitation. The non-aqueous electrolyte has a composition in which an electrolyte salt is included in a non-aqueous solvent, which is a solvent for the electrolyte. Examples of the non-aqueous solvent may include cyclic carbonate esters such as propylene carbonate, ethylene carbonate, butylene carbonate, chloroethylene carbonate, fluoroethylene carbonate, and vinylene carbonate, cyclic esters such as γ-butyrolactone and γ-valerolactone, chain carbonates such as dimethyl carbonate, diethyl carbonate, or ethylmethyl carbonate, chain esters such as methylformate, methylacetate, methylbutyrate, ethyl propionate, propyl propionate, ethers such as tetrahydrofuran or a derivative thereof, 1,3-dioxane, 1,4-dioxane, 1,2-dimethoxyethane, 1,4-dibutoxyethane, or methyldiglyme, ethylene glycol monopropyl ether, or propylene glycol monopropyl ether, nitriles such as acetonitrile and benzonitrile, dioxolane or a derivative thereof, ethylene sulfide, sulfolane, sultone, or a derivative thereof, which may be used alone or in a mixture of two or more. On the other hand, when two or more types of non-aqueous solvents are mixed and used, a mixing ratio of each non-aqueous solvent may be a mixing ratio that may be used in a conventional rechargeable lithium ion battery.

Examples of the electrolyte salt may include an inorganic ion salt including one of lithium (Li), sodium (Na) or potassium (K) such as $LiClO_4$, $LiBF_4$, $LiAsF_6$, $LiPF_6$, $LiPF_{6-x}(C_nF_{2n+1})_x$ [provided that $1<x<6$ and $n=1$ or 2], LiSCN, LiBr, LiI, $Li_2SO_4$, $Li_2B_{10}Cl_{10}$, $NaClO_4$, NaI, NaSCN, NaBr, $KClO_4$, KSCN, KI, KBr, or an organic ion salt such as $LiCF_sSO_s$, $LiN(CF_3SO_2)_2$, $LiN(C_2F_5SO_2)_2$, $LiN(CF_3SO_2)(C_4F_9SO_2)$, $LiC(CF_3SO_2)_3$, $LiC(C_2F_5SO_2)_3$, $(CH_3)_4NBF_4$, $(CH_3)_4NBr$, $(C_2H_5)_4NClO_4$, $(C_2H_5)_4NI$, $(C_3H_7)_4NBr$, $(n-C_4H_9)_4NClO_4$, $(n-C_4H_9)_4NI$, $(C_2H_5)_4N$-maleate, $(C_2H_5)_4N$-benzoate, $(C_2H_5)_4N$-phthalate, lithium stearyl sulfonate, lithium octyl sulfonate, lithium dodecylbenzene sulfonate, and the like, and it is also possible to use these ionic compounds alone or in a mixture of two or more types. Meanwhile, a concentration of the electrolyte salt may be the same as that of a non-aqueous electrolyte used in a conventional rechargeable lithium ion battery, and is not particularly limited. In an embodiment, it is desirable to use a non-aqueous electrolyte including the aforementioned lithium compound (electrolytic salt) at a concentration of greater than or equal to about 0.8 mol/L and less than or equal to about 1.5 mol/L.

Meanwhile, various additives may be added to the non-aqueous electrolyte. Examples of such additives may include negative electrode-acting additives, positive electrode-acting additives, ester additives, carbonate ester additives, sulfuric acid ester additives, phosphoric acid ester additives, boric acid ester additives, acid anhydride additives, and electrolyte additives. One of these may be added to the non-aqueous electrolyte, and a plurality of types of additives may be added.

<2. Configuration of Non-aqueous Electrolyte Rechargeable Battery According to The Present Embodiment>

Hereinafter, the characteristic configuration of the non-aqueous electrolyte rechargeable battery according to an embodiment will be described.

In addition to the aforementioned components, the positive electrode mixture layer of the non-aqueous electrolyte rechargeable battery according to the present embodiment includes composite particles for non-aqueous electrolyte rechargeable batteries (also simply referred to as composite particles) that function as a heat suppressing additive to suppress internal temperature increase of the battery.

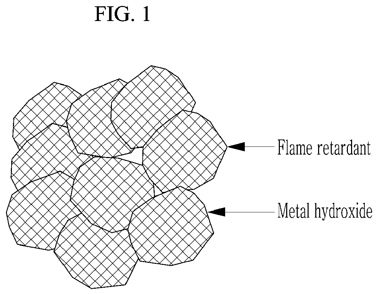

These composite particles are composite particles in which a metal hydroxide capable of absorbing heat through an endothermic reaction and a flame retardant having a radical trapping ability are combined. As shown in FIG. 1, these composite particles are combined after the metal hydroxide particles and the flame retardant are mixed as uniformly as possible. For example, a plurality of metal hydroxide particles including the flame retardant on the surface and inside are gathered together. Herein, the composite means, for example, a state in which a plurality of particles are formed into one aggregate by chemically bonding to each other through the functional groups (for example, hydroxyl and phosphate groups) possessed by each particle. The chemical bond herein includes not only covalent bonds but also various bonds such as ionic bonds, coordination bonds, and metallic bonds. The bonding state between particles can be confirmed by, for example, X-ray photoelectron spectroscopy. The particle diameter of the composite particles may be such that the integrated value of 50% ($D_{50}$) of the volume-based particle size distribution may be greater than or equal to about 0.1 $\mu$m and less than or equal to about 8 $\mu$m. The $D_{50}$ of the composite particle may be greater than or equal to about 0.5 $\mu$m and less than or equal to about 6 $\mu$m, and, for example, greater than or equal to about 1 $\mu$m and less than or equal to about 5 $\mu$m.

The particle diameter of the composite particles can be controlled by the preparing conditions of the composite particles. For example, if the temperature for preparing composite particles is increased or the stirring speed is increased, the particle diameter of the composite particles tends to become smaller. For example, it is possible to make the particle diameter of the composite particles smaller than the particle diameter of the metal hydroxide that is the starting material.

The metal hydroxide particles may be any endothermic material capable of causing an endothermic reaction and are not particularly limited. Examples of the metal hydroxides include aluminium hydroxide, pseudo-boehmite, boehmite, alumina, and kaolinite. These may be used alone, or two or more types may be used together.

The integrated value of 50% ($D_{50}$) of the volume-based particle size distribution of the metal hydroxide particles may be greater than or equal to about 10 nm and less than or equal to about 10 $\mu$m, and, for example, greater than or equal to about 50 nm and less than or equal to about 5 $\mu$m.

The flame retardant may be any that has a radical trapping ability to capture radicals such as oxygen radicals generated in the positive electrode mixture layer, and may include, for example, at least one type selected from phosphoric acid, phosphoric acid ester (such as phenyl phosphate and diphenyl phosphate), phosphonic acid (such as methyl phosphonic acid and phenyl phosphonic acid), and phosphinic acid (such as methyl phosphinic acid), which can form a functional group including a phosphorus (P) element by combining with the metal hydroxide.

A content of the metal hydroxide particles in the composite particles may be in the range of greater than or equal to about 1 mass% and less than or equal to about 50 mass%, greater than or equal to about 5 mass% and less than or equal to about 30 mass%, or greater than or equal to about 10 mass% and less than or equal to about 20 mass% based on the total weight of the composite particles (100 mass%).

A content of the flame retardant in the composite particles may be in the range of greater than or equal to about 0.1 mass% and less than or equal to about 90 mass%, greater than or equal to about 1 mass% and less than or equal to about 85 mass%, or greater than or equal to about 10 mass% and less than or equal to about 80 mass% based on a total weight of the composite particles (100 mass%).

A content of composite particles in the positive electrode mixture layer may be in the range of greater than or equal to about 0.1 mass% and less than or equal to about 5 mass%, greater than or equal to about 0.2 mass% and less than or equal to about 3 mass%, or greater than or equal to about 0.5 mass% and less than or equal to about 2 mass% based on a total weight of the positive electrode mixture layer.

Within this range, sufficient heat suppression effect and good battery performance can be achieved.

In addition, the content of the composite particles for a non-aqueous electrolyte rechargeable battery based on a total non-aqueous electrolyte rechargeable battery varies depending on the use of the non-aqueous electrolyte rechargeable battery and is not limited to the range below, but, for example, when the overall mass of the rechargeable battery is 100 mass%, the content of composite particles for non-aqueous electrolyte rechargeable batteries included in the non-aqueous electrolyte rechargeable battery may be greater than or equal to about 0.01 mass% and less than or equal to about 5.0 mass%, greater than or equal to about 0.02 mass% and less than or equal to about 2.0 mass%, or greater than or equal to about 0.1 mass% and less than or equal to about 0.5 mass%.

<3. Manufacturing Method of Non-aqueous Electrolyte Rechargeable Battery According to an Embodiment >

Hereinafter, the manufacturing method of the non-aqueous electrolyte rechargeable battery according to the present embodiment is described.

(3-1. Preparing Method of Composite Particles)

The composite particles for a non-aqueous electrolyte rechargeable battery according to the present embodiment can be prepared by mixing metal hydroxide particles and a flame retardant and heating them.

The mixing may be performed, for example, by dispersing the metal hydroxide particles and the flame retardant in an appropriate solvent and stirring them. Herein, the stirring speed may be greater than or equal to about 50 m/min and less than or equal to about 500 m/min, or, for example, greater than or equal to about 100 m/min and less than or equal to about 400 m/min.

The composite particles can be obtained by heating the dispersion to a temperature of, for example, greater than or equal to about 40 °C and less than or equal to about 100 °C, reacting at this temperature for greater than or equal to about 1 hour and less than or equal to about 48 hours, and then filtering it with filter paper.

The solvent may be water, or a mixture of water and an alcohol-based organic solvent such as ethanol or 2-propanol.

The heating temperature may be greater than or equal to about 60 °C and less than or equal to about 80 °C, and the heating time (reaction time) may be greater than or equal to about 5 hours and less than or equal to about 30 hours.

The fact that the particles produced as described above have become the target composite particles may be confirmed, for example, by an amount of various degassing due to various modifying groups being in the following range.

In addition, when the composite particles are heated from about 80 °C to about 1400 °C, the amount of $P_2$ gas desorbed from the composite particles measured by TDS-MS (referred to as MS1) may be greater than or equal to about $200 \times 10^{-6}$ mol/g and less than or equal to about $2500 \times 10^{-6}$ mol/g and the amount of desorbed $H_2O$ (referred to as MS2) may be greater than or equal to about $50 \times 10^{-6}$ mol/g and less than or equal to about $1000 \times 10^{-6}$ mol/g.

MS1 may be greater than or equal to about $300 \times 10^{-6}$ mol/g and less than or equal to about $2000 \times 10^{-6}$ mol/g, or greater than or equal to about $400 \times 10^{-6}$ mol/g and less than or equal to about $1800 \times 10^{-6}$ mol/g.

MS2 may be greater than or equal to about $100 \times 10^{-6}$ mol/g and less than or equal to about $950 \times 10^{-6}$ mol/g, or and greater than or equal to about $300 \times 10^{-6}$ mol/g and less than or equal to about $900 \times 10^{-6}$ mol/g.

Moreover, a ratio (M1/M2) of the amounts of these desorbed gases may be greater than or equal to about 0.5 and less than or equal to about 10.0, greater than or equal to about 0.5 and less than or equal to about 5.0, or greater than or equal to about 0.8 and less than or equal to about 3.0. For example, a ratio of the amounts of desorbed gases may satisfy Formula (1): $0.5 \leq (MS1/MS2) \leq 10.0...(1)$. When the ratio (M1/M2) of the amounts of desorbed gases satisfies these ranges, both the temperature increase suppressing effect by increasing the modification by the flame retardant and the battery performance may be exhibited in a better balance.

In addition, a specific surface area of the composite particles calculated by the adsorption isotherm measured by adsorbing nitrogen to the composite particles may be greater than or equal to about 8 $m^2$/g and less than or equal to about 150 $m^2$/g, greater than or equal to about 8 $m^2$/g and less than or equal to about 80 $m^2$/g, greater than or equal to about 10 $m^2$/g and less than or equal to about 75 $m^2$/g, or greater than or equal to about 15 $m^2$/g and less than or equal to about 75 $m^2$/g.

In order to prepare the composite particles including flame retardant that is more modified to the metal hydroxide, it is desirable to use a metal hydroxide as a starting material with as large a specific surface area as possible and to mix the metal hydroxide with a relatively large specific surface area with a flame retardant to set the specific surface area of the composite particles in the above-mentioned range. The specific surface area of the composite particles tends to decrease when the amount of flame retardant added to the metal hydroxide is increased or the reaction time when combining the metal hydroxide and flame retardant is lengthened. Accordingly, the specific surface area of the composite particles can be adjusted by changing these conditions, and thus the specific surface area of the metal hydroxide as the starting material is not particularly limited, but the specific surface area of the metal hydroxide may be, for example, greater than or equal to about 100 $m^2$/g and less than or equal to about 500 $m^2$/g.

For the composite particle according to the present embodiment, it is desirable that the content of Al (aluminium) element and P (phosphorus) element measured by inductively coupled plasma emission spectroscopy (ICP-AES) is within the following range.

The content of Al element in the composite particles may be greater than or equal to about 1 mass% and less than or equal to about 50 mass%, greater than or equal to about 3 mass% and less than or equal to about 40 mass%, or greater than or equal to about 5 mass% and less than or equal to about 30 mass%.

The content of P element in the composite particles may be greater than or equal to about 1 mass% and less than or equal to about 50 mass%, greater than or equal to about 3 mass% and less than or equal to about 40 mass%, or greater than or equal to about 5 mass% and less than or equal to about 30 mass%.

In order to further improve the endothermic effect of the composite particles, the composite particles may be modified with functional groups such as $CH_3$ groups and $CH_2OH$ groups. A degree of modification by these functional groups may be evaluated by the following desorption amounts of various gases derived from these functional groups, in the same way as the degree of modification by functional groups including the phosphorus (P) element (e.g., phosphonic acid). It is desirable that the desorption amounts of various gases satisfy the following ranges. On the other hand, the desorption amounts of various gases can be adjusted depending on the type and content of the metal hydroxide and flame retardant used in preparing the composite particles.

The amount (referred to as MS3) of desorbed $CH_4$ gas measured by TDS-MS, which is the amount of $CH_4$ gas desorbed from the composite particle when the composite particle is heated from about 80 °C to about 1400 °C, may be 0, but it may exceed 0 and be less than or equal to about $1000 \times 10^{-6}$ mol/g, greater than or equal to about $10 \times 10^{-6}$ mol/g and less than or equal to about $700 \times 10^{-6}$ mol/g, or greater than or equal to about $30 \times 10^{-6}$ mol/g and less than or equal to about $500 \times 10^{-6}$ mol/g.

The amount of desorbed CHsOH (referred to as MS4) measured may be 0, but it may exceed 0 and be less than or equal to about $4000 \times 10^{-6}$ mol/g, greater than or equal to about $200 \times 10^{-6}$ mol/g and less than or equal to about $3000 \times 10^{-6}$ mol/g, or greater than or equal to about $500 \times 10^{-6}$ mol/g and less than or equal to about $3000 \times 10^{-6}$ mol/g.

When the composite particles are modified with a functional group including a phenyl group, it is easy to disperse the metal hydroxide particles in the solvent when preparing a slurry using a non-aqueous solvent such as N-methyl-2-pyrrolidone (NMP).

Therefore, the amount (referred to as MS5) of desorbed $C_6H_6$ from about 80 °C to about 1400 °C by TDS-MS of the metal hydroxide particles may be 0, but may be greater than 0 and less than or equal to about $4000\times10^{-6}$ mol/g, greater than or equal to about $10\times10^{-6}$ mol/g and less than or equal to about $3000\times10^{-6}$ mol/g, or greater than or equal to about $100\times10^{-6}$ mol/g and less than or equal to about $3000\times10^{-6}$ mol/g.

The total content of modified molecules in the composite particles may be in the range of greater than or equal to about 10 mass% and less than or equal to about 99 mass%, greater than or equal to about 20 mass% and less than or equal to about 97 mass%, or greater than or equal to about 30 mass% and less than or equal to about 95 mass% based on 100 mass% of the total composite particles.

(3-2. Manufacturing Method of Positive Electrode)

The positive electrode is produced as follows. First, a positive electrode slurry is formed by dispersing a mixture of a positive electrode active material, a conductive agent, a positive electrode binder, and composite particles in a desired ratio in a solvent for a positive electrode slurry. Next, this positive electrode slurry is coated on the positive electrode current collector and dried to form a positive electrode mixture layer. On the other hand, the coating method is not particularly limited. The coating method may include a knife coater method, a gravure coater method, a reverse roll coater, a slit die coater, and the like. Each of the following coating processes is also performed by the same method. Subsequently, the positive electrode material mixture layer is pressed by a press to have a desired density. Thus, a positive electrode is manufactured.

(3-3. Manufacturing Method of Negative Electrode)

The negative electrode is also produced in the same way as the positive electrode. First, a negative electrode slurry is prepared by dispersing a mixture of materials constituting the negative electrode mixture layer in a solvent for a negative electrode slurry. Next, a negative electrode mixture layer is formed by coating the negative electrode slurry on the negative current collector and drying it. Next, the negative electrode material mixture layer is pressed by a press machine so as to have a desired density. Thus, a negative electrode is manufactured.

(3-4. Manufacturing Method of Non-aqueous Electrolyte Rechargeable Battery)

Next, an electrode structure is manufactured by placing a separator between the positive electrode and the negative electrode. Then, the electrode structure may be processed into a desired shape (e.g., cylindrical shape, prismatic shape, laminated shape, button shape, etc.) and inserted into a container of the above shape. Subsequently, a non-aqueous electrolyte is inserted into the corresponding container to impregnate the electrolyte into each pore in the separator or a gap between the positive electrode and negative electrode. Accordingly, a rechargeable lithium ion battery is manufactured.

<4. Effect by the Present Embodiment >

According to the non-aqueous electrolyte rechargeable battery configured as described above, even in an environment where the internal temperature is likely to rise due to battery abnormalities such as internal short circuits, the increase in the internal temperature of the non-aqueous electrolyte rechargeable battery may be sufficiently suppressed, electrical resistance of the non-aqueous electrolyte rechargeable battery may be suppressed to a small level, and cycle characteristics may be improved.

<5. Another Embodiment>

The present disclosure is not limited to the aforementioned embodiments.

In the aforementioned embodiment, the case where the positive electrode includes the composite particles according to the present invention has been described, but the negative electrode may also include the composite particles. When including composite particles in the negative electrode, it is desirable to set the content equivalent to that in the case of including them in the positive electrode.

Additionally, the composite particles may be included in the electrolyte, or may be included in multiple locations in the positive electrode, negative electrode, and electrolyte.

When the negative electrode includes the composite particles for a non-aqueous electrolyte rechargeable battery, a content of the composite particles for a non-aqueous electrolyte rechargeable battery based on a total negative electrode may be in the same range as that for the positive electrode. When the electrolyte includes the composite particles for a non-aqueous electrolyte rechargeable battery, a content of the composite particles for a non-aqueous electrolyte rechargeable battery when the mass of the total electrolyte is 100 mass% may be in the range of about 0.1 mass% to about 10.0 mass%.

In addition, the present invention is not limited to these embodiments but may be variously modified without deviating from the purpose.

[Examples]

Hereinafter, the present invention will be described in more detail according to the following examples. However, the following examples are only one example of the present invention, and the present invention is not limited to the following examples.

<Production of Composite Particles or Particle Mixture>

(Example 1)

As starting materials, 1.0 g of aluminium hydroxide ($D_{50}$: 3 $\mu$m, BET: 205 $m^2$/g), Manufacturer: Iwatani Chemical Industry Co., Ltd.) and 5.0 g of methyl phosphinic acid were used, and these were dispersed in 50 cc of a mixed solution of ethanol and purified water (mixing volume ratio 1:1). This dispersion was heated at 70 °C and a stirring speed of 300 m/min for 24 hours, filtered with water and ethanol, and washed with water and ethanol, and the solid on the filter paper was vacuum dried to obtain Composite particles A.

(Example 2)

Composite particles B were obtained in the same manner as in Example 1, except that 1.0 g of activated alumina ($D_{50}$: 3 $\mu$m, BET: 300 $m^2$/g, Manufacturer: Zibo Yinghe Chemical Co., Ltd.) and 5.0 g of methyl phosphonic acid were used as starting materials.

(Example 3)

Composite particles C were obtained in the same manner as in Example 1, except that 1.0 g of pseudo-boehmite ($D_{50}$: 1.8 $\mu$m, BET: 384 $m^2$/g, Manufacturer: Zibo Linxi Chemical Co., Ltd.) and 5.0 g of diphenyl phosphate were used as starting materials.

(Example 4)

Composite particles D were obtained in the same manner as in Example 1, except that 1.0 g of kaolinite ($Al_2Si_2O_5(OH)_4$, $D_{50}$: 1 $\mu$m, BET: 120 $m^2$/g, Manufacturer: Hebei Jinshi New Materials Technology Co., Ltd.) and 5.0 g of phenyl phosphate were used as starting materials.

(Example 5)

Composite particles E were obtained in the same manner as in Example 1, except that 1.0 g of pseudo-boehmite ($D_{50}$: 1.8 $\mu$m, BET: 384 $m^2$/g, Manufacturer: Zibo Linxi Chemical Co., Ltd.) and 5.0 g of phenyl phosphonic acid were used as starting materials.

(Example 6)

Composite particles F were obtained in the same manner as in Example 1, except that 1.0 g of pseudo-boehmite ($D_{50}$: 1.8 $\mu$m, BET: 384 $m^2$/g, Manufacturer: Zibo Linxi Chemical Co., Ltd.) and 1.0 g of diphenyl phosphate were used as starting materials.

(Example 7)

Composite particles F were obtained in the same manner as in Example 1, except that 1.0 g of pseudo-boehmite ($D_{50}$: 1.8 $\mu$m, BET: 384 $m^2$/g, Manufacturer: Zibo Linxi Chemical Co., Ltd.) and 1.0 g of phenyl phosphate were used as starting materials.

(Example 8)

Composite particles H were obtained in the same manner as in Example 1, except that 1.0 g of pseudo-boehmite ($D_{50}$: 1.8 $\mu$m, BET: 384 m$^2$/g, Manufacturer: Zibo Linxi Chemical Co., Ltd.) and 5.0 g of methyl phosphinic acid were used as starting materials.

(Example 9)

Composite particles I were obtained in the same manner as in Example 1, except that 1.0 g of pseudo-boehmite ($D_{50}$: 1.8 $\mu$m, BET: 384 m$^2$/g, Manufacturer: Zibo Linxi Chemical Co., Ltd.) and 5.0 g of phosphoric acid were used as starting materials.

(Example 10)

Composite particles J were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of phenyl phosphonic acid were used as starting materials.

(Example 11)

Composite particles K were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of methyl phosphonic acid were used as starting materials.

(Example 12)

Composite particles L were obtained in the same manner as in Example 1, except that 1.0 g of kaolinite ($Al_2Si_2O_5(OH)_4$, $D_{50}$: 1 $\mu$m, BET: 120 m$^2$/g, Manufacturer: Hebei Jinshi New Materials Technology Co., Ltd.) and 5.0 g of methyl phosphinic acid were used as starting materials.

(Example 13)

Composite particles M were obtained in the same manner as in Example 1, except that 1.0 g of aluminium hydroxide ($D_{50}$: 3 $\mu$m, BET: 205 m$^2$/g, Manufacturer: Iwatani Chemical Industry Co., Ltd.) and 5.0 g of methyl phosphonic acid were used as starting materials.

(Example 14)

Composite particles N were obtained in the same manner as in Example 1, except that 1.0 g of aluminium hydroxide ($D_{50}$: 3 $\mu$m, BET: 205 m$^2$/g, Manufacturer: Iwatani Chemical Industry Co., Ltd.) and 5.0 g of phenyl phosphonic acid were used as starting materials.

(Example 15)

Composite particles O were obtained in the same manner as in Example 1, except that 1.0 g of activated alumina ($D_{50}$: 3 $\mu$m, BET: 300 m$^2$/g, Manufacturer: Zibo Yinghe Chemical Co., Ltd.) and 5.0 g of methyl phosphinic acid were used as starting materials.

(Example 16)

Composite particles P were obtained in the same manner as in Example 1, except that 1.0 g of activated alumina ($D_{50}$: 3 $\mu$m, BET: 300 m$^2$/g, Manufacturer: Zibo Yinghe Chemical Co., Ltd.) and 5.0 g of phenyl phosphonic acid were used as starting materials.

(Comparative Example 5)

Composite particles Q were obtained in the same manner as in Example 1, except that 1.0 g of aluminium hydroxide ($D_{50}$: 18 $\mu$m, BET: 125 m$^2$/g, Manufacturer: Iwatani Chemical Industry Co., Ltd.) and 2.0 g of methyl phosphonic acid were used as starting materials.

(Comparative Example 6)

1.0 g of aluminium hydroxide ($D_{50}$: 5 $\mu$m, BET: 20 $m^2$/g, Manufacturer: Iwatani Chemical Industry Co., Ltd.) and 1.0 g of phosphoric acid were mixed for 10 minutes using a V-type mixer manufactured by Dalton Co., Ltd. to obtain Particle mixture a.

(Comparative Example 7)

1.0 g of pseudo-boehmite ($D_{50}$: 1.8 $\mu$m, BET: 384 $m^2$/g, Manufacturer: Zibo Linxi Chemical Co., Ltd.) and 1.0 g of diphenyl phosphate were mixed for 10 minutes using a V-type mixer manufactured by Dalton Co., Ltd. to obtain Particle mixture b.

<Manufacture of Positive Electrode>

(Examples 1 to 16 and Comparative Examples 2 to 7)

$LiCoO_2$, acetylene black, and polyvinylidene fluoride, the composite particles, endothermic particles, particle mixtures, or radical scavengers listed in Table 1 (composite particles, endothermic particles, particle mixtures, or radical scavengers are collectively referred to as heat suppressing additives), and polyvinylidene fluoride as a binder were dispersed and mixed in a form of dry powders (solid content) including no solvent in N-methyl-2-pyrrolidone solvent to prepare positive electrode mixture slurries. Next, the slurry is coated on one surface or both surfaces of the aluminium current collector so that the mixture application amount (surface density) after drying is 20.0 mg/$cm^2$ on one surface, dried, and then pressed with a roll press machine so that the positive electrode mixture layer density was 4.15 g/cc to form a positive electrode mixture layer.

(Comparative Example 1)

A positive electrode was manufactured in the same manner as in Example 1, except that $LiCoO_2$, acetylene black, and polyvinylidene fluoride were dispersed and mixed in N-methyl-2-pyrrolidone solvent in a mass ratio of 97.7:1.0:1.3 as a dry powder (solid content) including no solvent to prepare a positive electrode mixture slurry.

< Manufacture of Negative Electrode >

(Examples 1 to 16, Comparative Examples 1 to 7)

Artificial graphite, carboxymethyl cellulose sodium salt (CMC), and styrene-butadiene-based water dispersion were dissolved and dispersed in an aqueous solvent so that the mass ratio as dry powder (solid content) including no solvent is 97.5:1.0:1.5, to prepare a negative electrode mixture slurry. Next, the negative electrode mixture slurry was coated and dried on one surface or both surfaces of the copper foil, which is the negative electrode current collector, so that the mixture coating amount (surface density) after drying was 15.0 mg/$cm^2$, and then the pressed with a roll press machine to manufacture a negative electrode so that the negative electrode mixture layer density was 1.65 g/cc.

<Manufacture of Rechargeable Battery Cells >

(Examples 1 to 16 and Comparative Examples 1 to 7)

A plurality of the positive electrodes and a plurality of the negative electrode were stacked with a polypropylene porous separator between the positive and negative electrodes to have battery design capacity of 300 mAh, manufacturing an electrode stack. At this time, as the positive electrode and negative electrode placed inside the electrode stack, mixture layers formed on both surfaces of the current collector were used, and for the positive electrode or negative electrode disposed on the outermost layer, a mixture layer formed on only one surface was used. For example, a positive electrode with an electrode plate area of 8.5 $cm^2$ (both surfaces, 5 sheets) and a negative electrode with an electrode plate area of 10.0 $cm^2$ (4 sheets of both surfaces and 2 sheets of one surface) were manufactured. Subsequently, a rechargeable battery cell before the initial charge was manufactured by welding nickel and aluminium lead wires respectively to the negative and positive electrodes of the electrode stack, housing the electrode stack in an aluminium laminate film with the lead wires externally pulled out, injecting an electrolyte thereinto, and sealing the aluminium laminate film under a reduced pressure. The electrolyte was prepared by dissolving 1.3 M $LiPF_6$ and 1 mass% of vinylene carbonate in a mixed solvent of ethylene carbonate / dimethyl carbonate / fluoroethylene carbonate in a volume ratio of 15/80/5.

<Evaluation of Heat Suppressing Additives >

The heat suppressing additives used in the Examples and Comparative Examples were evaluated as follows.

(Elemental Analysis)

Measurements were made in accordance with JIS K0116:2014 using an inductively coupled plasma emission spectroscopic analyzer (ICP-AES, Agilent Technology Co., Ltd., Agilent 5110 VDV type), and the Al element and P element included in the endothermic particles or radical scavenger of each Example and Comparative Example were quantitatively analyzed.

(Specific Surface Area (BET))

The specific surface area (BET calculated based on the adsorption isotherm measured by adsorbing water vapor) of the inorganic particles or composite particles was measured using a gas adsorption amount measuring device (BELSORP manufactured by Microtrac Bell), according to JIS K6217-2.

(Mass of Desorbed Gas)

Thermal desorption gas mass spectrometry (TDS-MS) was conducted by using a thermal desorption gas mass spectrometer (TDS-1200, ESCO, Ltd.) to measure and analyze each desorbed amount of methane molecules, methanol molecules, benzene molecules, diphosphorus molecules, and water molecules, as follows.
In TDS, the sample materials were set by using a sample stage made of quartz and a sample dish made of SiC. In addition, the temperature increase rate was 60 °C/min. The temperature increase was controlled by monitoring a temperature on the sample surface. Furthermore, a weight of the sample was 1 mg, which was corrected by an actual weight. A quadruple mass spectrometer was used for a detection, and a voltage applied thereto was 1000 V.
TDS was used to measure an amount ($\mu$mol/g) of each gas desorbed from the inorganic particles or composite particles during the temperature increase from 80 °C to 1400° C. The mass number [M/z] used for analyzing the measurements was 15 for $CH_4$, 18 for $H_2O$, 31 for $CHsOH$, 62 for $P_2$, and 78 for $C_6H_6$, wherein gases corresponding to the mass numbers were all each of the aforementioned substances. Herein, regarding the gas amount of $H_2O$, an integrated value only from 80 °C to 200 °C out of the entire temperature range was used to obtain the desorbed $H_2O$ amount (MS2).

(Evaluation of Particle Diameter)

The particle diameter of the composite particle, endothermic particle, or particle mixture was evaluated as $D_{50}$, 50% of the integrated value of the particle size distribution based on the particle diameter volume in the particle size distribution obtained by laser diffraction/scattering method. $D_{50}$ was measured using the following equipment and conditions.

Measuring device: Laser diffraction/scattering particle diameter distribution measuring device MT3300 (manufactured by Micro Track Bell)
Permeability: Permeable
Shape: Non-spherical
Circulation speed: 7
Measurement time: 30 seconds
Number of repetitions: 3
Refractive index:

a. Composite particles, endothermic particles, or particle mixtures: 1.65
b. Ethanol solvent: 1.36

[Evaluation of Rechargeable Battery Cells]

(Cycle Characteristics)

The rechargeable battery cells according to Examples 1 to 16 and Comparative Examples 1 to 7 were charged under a constant current to 4.3 V at 0.1 CA of design capacity and charged under a constant voltage to 0.05 CA still at 4.3 V in a 25 °C thermostat. Subsequently, the cells were discharged under a constant current to 3.0 V at 0.1 CA. In addition, the cells were measured with respect to initial discharge capacity after the 1st cycle through a constant current charge at 0.2 CA, a constant voltage charge at 0.05 CA, and a constant current discharge at 0.2 CA under conditions of a charge cut-off voltage of 4.3 V and a discharge cut-off voltage of 3.0 V in the 25 °C thermostat. The rechargeable battery cells were 100 cycles charged and discharged through a constant current charge at 0.5 CA, a constant voltage charge at 0.05 CA, and a constant current discharge 0.5 CA under conditions of a charge cut-off voltage of 4.3 V and a discharge cut-off voltage of 3.0 V at 45 °C to test a cycle-life. After the 100 cycles, discharge capacity at a constant current charge of 0.2 CA, a constant voltage charge of 0.05 CA, and a discharge at 0.2 CA of the cells was measured and was divided by the initial discharge capacity to obtain capacity retention after the 100 cycles.

(Heating Test)

The rechargeable battery cells according to Examples 1 to 16 and Comparative Examples 1 to 7 were charged under a constant current to 4.3 V at design capacity of 0.1 CA and charged under a constant voltage at 4.3 V to 0.05 CA in the 25 °C thermostat. Subsequently, the cells were discharged to 3.0 V at 0.1 CA under a constant current. In addition, in the 25 °C thermostat, after performing a constant current charge at 0.2 CA, a constant voltage charge at 0.05 CA, and a constant current discharge at 0.2 CA under conditions of a charge cut-off voltage of 4.3 V and a discharge cut-off voltage of 3.0 V as 1 cycle, the cells were charged again under a constant current/constant voltage to 4.42 V, which were regarded as initial cells. These rechargeable battery cells were left for 1 hour in a thermostat heated to 165 °C, and a case where a voltage of a battery cell became 4.3 V or less was regarded as "abnormal occurrence," and an abnormal occurrence rate was evaluated in 10 individual battery tests.

(Nail Penetration Test)

A nail penetration test was conducted by penetrating the aforementioned initial cells in the center with a nail having a diameter of 3 mm at 1 mm/s. A case where an external temperature of a battery cell reached 50 °C or higher 5 seconds after being penetrated with the nail was regarded as "abnormal occurrence," and an abnormal occurrence rate was evaluated in 10 individual battery tests.

(Overcharge Test)

A case where an external temperature of a battery cell reached 50 °C or higher after additionally charging the aforementioned initial cells under a constant current to 12 V at 3 CA and then, charging them under a constant voltage for 10 minutes after reaching 12 V was regarded as "abnormal occurrence," an abnormal occurrence rate was evaluated in 10 individual battery tests.

(Evaluation Results)

The types and physical properties of the heat suppressing additives used in the examples and comparative examples described above are shown in Table 1. In addition, the evaluation results for the rechargeable battery cells of Examples 1 to 16 and Comparative Examples 1 to 7 are summarized in Table 2.

**EP 4 407 705 A1**

(Table 1)

| | Heat suppressing additive | $D_{50}$ (μm) | Specific surface area (m²/g) | Element content | | Desorption gas mass | | | | | |
|---|---|---|---|---|---|---|---|---|---|---|---|
| | | | | Al (%) | P (%) | MS1 (μmol /g) | MS2 (μmol /g) | Mass ratio of desorbed gases (-) | MS3 (μmol /g) | MS4 (μmol /g) | MS5 (μmol /g) |
| Ex. 1 | Composite particle A | 3.5 | 21 | 17 | 20 | 1210 | 571 | 2.1 | 35 | 267 | 11 |
| Ex. 2 | Composite particle B | 7.0 | 68 | 11 | 26 | 1613 | 851 | 1.9 | 35 | 267 | 12 |
| Ex. 3 | Composite particle C | 1.8 | 58 | 8 | 9 | 583 | 721 | 0.8 | 418 | 2941 | 2841 |
| Ex. 4 | Composite particle D | 1.1 | 48 | 6 | 15 | 904 | 751 | 1.2 | 209 | 1612 | 1475 |
| Ex. 5 | Composite particle E | 0.2 | 28 | 7 | 16 | 987 | 734 | 1.3 | 209 | 1601 | 1473 |
| Ex. 6 | Composite particle F | 1.5 | 74 | 21 | 12 | 740 | 871 | 0.8 | 35 | 267 | 10 |
| Ex. 7 | Composite particle G | 1.6 | 51 | 6 | 15 | 910 | 721 | 1.3 | 221 | 1588 | 1489 |
| Ex. 8 | Composite particle H | 1.7 | 21 | 17 | 20 | 1189 | 621 | 1.9 | 45 | 281 | 21 |
| Ex. 9 | Composite particle I | 1.8 | 67 | 7 | 26 | 1603 | 820 | 2.0 | 0 | 0 | 0 |
| Ex. 10 | Composite particle J | 1.3 | 41 | 7 | 16 | 958 | 741 | 1.3 | 221 | 1581 | 1421 |
| Ex. 11 | Composite particle K | 1.2 | 68 | 11 | 26 | 1598 | 824 | 1.9 | 35 | 267 | 12 |
| Ex. 12 | Composite particle L | 1.5 | 23 | 17 | 20 | 1200 | 601 | 2.0 | 32 | 267 | 11 |
| Ex. 13 | Composite particle M | 3.2 | 62 | 11 | 26 | 1592 | 821 | 1.9 | 31 | 281 | 13 |
| Ex. 14 | Composite particle N | 2.9 | 38 | 7 | 16 | 992 | 725 | 1.4 | 205 | 1605 | 1501 |
| Ex. 15 | Composite particle O | 3.5 | 21 | 17 | 20 | 1198 | 598 | 2.0 | 32 | 258 | 10 |
| Ex. 16 | Composite particle P | 3.5 | 42 | 7 | 16 | 962 | 752 | 1.3 | 220 | 1525 | 1420 |
| Comp. Ex. 1 | | | | | | - | | | | | |
| Comp. Ex. 2 | Aluminium hydroxide particles | 3.0 | 205 | 32 | 0 | 0 | 60 | 0.0 | 0 | 0 | 0 |

15

(continued)

| | Heat suppressing additive | $D_{50}$ (μm) | Specific surface area (m²/g) | Element content | | Desorption gas mass | | | | | |
|---|---|---|---|---|---|---|---|---|---|---|---|
| | | | | Al (%) | P (%) | MS1 (μmol/g) | MS2 (μmol/g) | Mass ratio of desorbed gases (-) | MS3 (μmol/g) | MS4 (μmol/g) | MS5 (μmol/g) |
| Comp. Ex. 3 | Pseudo-boehmite particles | 1.8 | 384 | 32 | 0 | 0 | 1885 | 0.0 | 0 | 0 | 0 |
| Comp. Ex. 4 | Diphenyl phosphate | - | - | 0 | 12 | 765 | 0 | - | 418 | 3102 | 2950 |
| Comp. Ex. 5 | Composite particle Q | 13.0 | 76 | 26 | 8 | 425 | 985 | 0.4 | 18 | 124 | 2 |
| Comp. Ex. 6 | Particle mixture a | 5.0 | 10 | 16 | 16 | 493 | 21 | 23.5 | 0 | 0 | 0 |
| Comp. Ex. 7 | Particle mixture b | 1.8 | 192 | 16 | 6 | 185 | 943 | 0.2 | 421 | 2951 | 2912 |

(Table 2)

| | Discharge capacity retention rate after 100 cycles (%) | Heating test abnormal occurrence (%) | Nail penetration test abnormal occurrence (%) | Overcharge test abnormal occurrence (%) |
|---|---|---|---|---|
| Ex. 1 | 90.1 | 0 | 10 | 10 |
| Ex. 2 | 90.2 | 0 | 10 | 10 |
| Ex. 3 | 90.2 | 0 | 10 | 10 |
| Ex. 4 | 90.1 | 0 | 10 | 0 |
| Ex. 5 | 90.2 | 0 | 0 | 0 |
| Ex. 6 | 90.2 | 0 | 20 | 20 |
| Ex. 7 | 90.3 | 0 | 10 | 10 |
| Ex. 8 | 90.2 | 0 | 10 | 10 |
| Ex. 9 | 90.3 | 0 | 0 | 0 |
| Ex. 10 | 90.2 | 0 | 10 | 10 |
| Ex. 11 | 90.3 | 0 | 10 | 0 |
| Ex. 12 | 90.3 | 0 | 10 | 0 |
| Ex. 13 | 90.2 | 0 | 0 | 0 |
| Ex. 14 | 90.3 | 0 | 10 | 10 |
| Ex. 15 | 90.3 | 0 | 10 | 0 |
| Ex. 16 | 90.2 | 0 | 10 | 0 |
| Comp. Ex. 1 | 90.2 | 100 | 100 | 100 |

(continued)

| | Discharge capacity retention rate after 100 cycles (%) | Heating test abnormal occurrence (%) | Nail penetration test abnormal occurrence (%) | Overcharge test abnormal occurrence (%) |
|---|---|---|---|---|
| Comp. Ex. 2 | 87.2 | 70 | 100 | 90 |
| Comp. Ex. 3 | 86.5 | 70 | 80 | 90 |
| Comp. Ex. 4 | 85.8 | 80 | 80 | 100 |
| Comp. Ex. 5 | 89.1 | 50 | 70 | 70 |
| Comp. Ex. 6 | 86.8 | 80 | 90 | 90 |
| Comp. Ex. 7 | 86.2 | 90 | 90 | 90 |

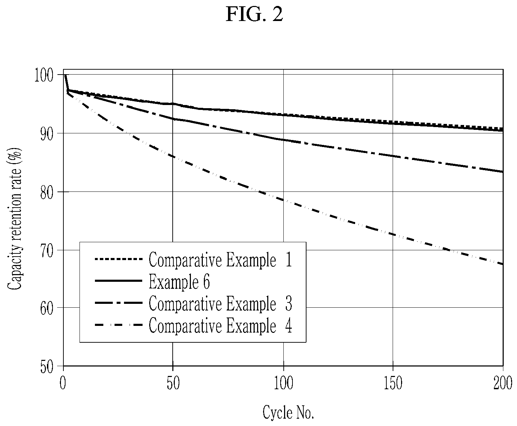

In addition, a graph of the discharge capacity retention rates for the rechargeable battery cells manufactured in Example 6, Comparative Example 1, Comparative Example 3, and Comparative Example 4 shown in Tables 1 and 2 is shown in FIG. 2.

< Confirmation of Exothermic Behavior under Coexistence of Charged Positive Electrode and Electrolyte >

The initial cells of the fully charged rechargeable battery cells manufactured in Example 2 and Comparative Example 1 shown in Table 1 and Table 2 were disassembled in a glove box, and the positive electrodes were washed with dimethyl carbonate solvent and dried, and the obtained positive electrodes were used as a "charged positive electrode."

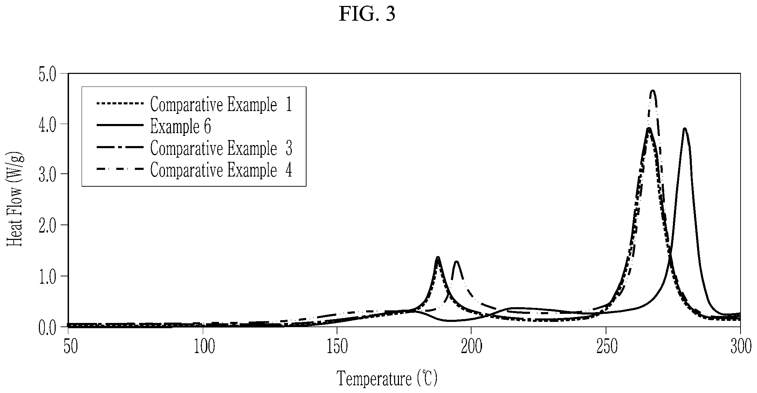

2.0 mg of the "charged positive electrode" and 1.0 mg of the same electrolyte used when manufacturing the rechargeable battery cell were placed in a special airtight container, caulked, and then using a differential scanning calorimetry device, DSC (manufactured by Hitachi High-Tech Science), the temperature was raised at a temperature increase rate of 5 K/min in accordance with the provisions of JISK7121, and the exothermic behavior was evaluated. The results are shown in FIG. 3.

< Review on Examples and Comparative Examples >

From the results in Table 2, compared to Comparative Examples 2 to 4 including only either a metal hydroxide or a radical scavenger, as well as Comparative Example 1 including no heat suppressing additive, in Examples 1 to 16, even under conditions where the internal temperature of the battery is likely to rise, such as high temperature conditions, external impact from nailing, or overcharging, the abnormal occurrence rate caused by temperature rise inside the battery could be sufficiently suppressed. This effect is also shown by the disappearance of the exothermic peak between 150 °C and 250 °C in the exothermic behavior in FIG. 3.

In addition, even when compared with Comparative Example 5, which includes composite particles as a heat suppressing additive but has a $D_{50}$ of 13 μm, and Comparative Examples 6 and 7, which include a particle mixture including the same components as the composite particles according to the present invention, in Examples 1 to 16, the abnormal occurrence rates caused by temperature rise inside the battery cells can be sufficiently suppressed.

Furthermore, from the results in Table 2 and FIG. 2, in Comparative Examples 2 to 7, the addition of various heat suppressing additives resulted in lower cycle characteristics than Comparative Example 1 without the addition of the heat suppressing additive, but in Examples 1 to 16, cycle characteristics equivalent to those of Comparative Example 1 can be maintained.

From the above experimental results, according to the present invention, composite particles having both an endothermic effect and radical scavenging ability are made, and the $D_{50}$ range of the composite particles is appropriately adjusted to increase the density of the positive electrode active material particles in the positive electrode mixture layer as much as possible. It is possible to arrange as many composite particles as possible around the positive electrode active material particles without deterioration. As a result, oxygen and radicals generated from the positive electrode active material are captured in the temperature range of 150 °C to 300 °C, and the decomposition reaction of the electrolyte is effectively suppressed, thereby sufficiently suppressing the increase in the internal temperature of the battery and suppressing deterioration of battery performance such as cycle characteristics.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

**Claims**

1. Composite particles for a non-aqueous electrolyte rechargeable battery, comprising a metal hydroxide and a flame retardant,

   an amount of desorbed $P_2$ (MS1) of the composite particles from about 80 °C to about 1400 °C as determined by thermal desorption gas mass spectrometry (TDS-MS) is greater than or equal to about $200\times10^{-6}$ mol/g and less than or equal to about $2500\times10^{-6}$ mol/g,
   an amount of desorbed $H_2O$ (MS2) from about 80 °C to about 200 °C by TDS-MS of the composite particles is greater than or equal to about $50\times10^{-6}$ mol/g and less than or equal to about $1000\times10^{-6}$ mol/g, and
   an integrated value of the volume-based particle size distribution of the composite particles is greater than or equal to about 0.1 $\mu$m and less than or equal to about 8 $\mu$m.

2. The composite particles as claimed in claim 1, wherein
   a specific surface area (BET) of the composite particles calculated by an adsorption isotherm measured by adsorbing nitrogen to the composite particles is greater than or equal to about 8 m$^2$/g and less than or equal to about 150 m$^2$/g.

3. The composite particles as claimed in claim 1 or claim 2, wherein a ratio of the amounts of desorbed gases satisfies Formula (1):

$$0.5 \leq (MS1/MS2) \leq 10.0 \ldots (1).$$

4. The composite particles as claimed in any one of claims 1 to 3, wherein
   the metal hydroxide is at least one selected from aluminium hydroxide, pseudo-boehmite, boehmite, alumina, and kaolinite, and a surface and an interior of the metal hydroxide are modified with a flame retardant.

5. The composite particles as claimed in any one of claims 1 to 4, wherein
   the flame retardant includes at least one of phosphoric acid, phosphoric acid ester, phosphonic acid, or phosphinic acid.

6. The composite particles as claimed in any one of claims 1 to 5, wherein
   a content of an aluminium element is about 1 mass% to 50 mass% and a content of a phosphorus element is about 1 mass% to about 50 mass% as determined by inductively coupled plasma emission spectroscopy (ICP-AES).

7. The composite particle as claimed in any one of claims 1 to 6, wherein

in the composite particles, an amount of desorbed $CH_4$ (MS3) from about 80 °C to about 1400 °C by TDS-MS is greater than or equal to about $30 \times 10^{-6}$ mol/g and less than or equal to about $500 \times 10^{-6}$ mol/g, and in the composite particles, an amount of desorbed CHsOH (MS4) from about 80 °C to about 1400 °C by TDS-MS is greater than or equal to about $500 \times 10^{-6}$ mol/g and less than or equal to about $3000 \times 10^{-6}$ mol/g.

8. The composite particles as claimed in any one of claims 1 to 7, wherein
an amount of desorbed $C_6H_6$ (MS5) from about 80 °C to about 1400 °C by TDS-MS is greater than or equal to about $100 \times 10^{-6}$ mol/g and less than or equal to about $3000 \times 10^{-6}$ mol/g.

9. The composite particles as claimed in any one of claims 1 to 8, wherein the metal hydroxide has a $D_{50}$ value greater than or equal to about 10 nm and less than or equal to about 10 $\mu$m.

10. The composite particles as claimed in any one of claims 1 to 9, wherein an amount of the metal hydroxide is greater than or equal to about 1 mass% and less than or equal to about 50 mass%, based on a total weight, 100 mass% of the composite particles.

11. The composite particles as claimed in any one of claims 1 to 10, wherein an amount of the flame retardant is greater than or equal to about 0.1 mass% and less than or equal to about 90 mass%, based on a total weight, 100 mass% of the composite particles.

12. A positive electrode for a non-aqueous electrolyte rechargeable battery, comprising

a positive electrode current collector and a positive electrode mixture layer on the positive electrode current collector,
wherein the positive electrode mixture layer includes a positive electrode active material and the composite particles as claimed in any one of claims 1 to 11.

13. A non-aqueous electrolyte rechargeable battery, comprising

a positive electrode, a negative electrode, a separator, and a non-aqueous electrolyte,
wherein the positive electrode is the positive electrode as claimed in claim 12.

14. The non-aqueous electrolyte rechargeable battery as claimed in claim 13, wherein an amount of the composite particles is greater than or equal to about 0.1 mass% and less than or equal to about 3.0 mass%, based on a total weight of the non-aqueous electrolyte rechargeable battery.

15. A method of preparing composite particles for a non-aqueous electrolyte rechargeable battery, comprising a process of mixing metal hydroxide particles and a flame retardant and heating them.

FIG. 1

Flame retardant

Metal hydroxide

FIG. 2

FIG. 3

EP 4 407 705 A1

Europäisches
Patentamt

European
Patent Office

Office européen
des brevets

# EUROPEAN SEARCH REPORT

Application Number

EP 24 15 2704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 3 675 230 A1 (LG CHEMICAL LTD [KR])<br>1 July 2020 (2020-07-01)<br>* paragraphs [0087], [0090], [0093] * | 1-9,<br>11-13,15<br>10,14 | INV.<br>H01M4/13<br>H01M4/62<br>H01M10/42 |
| X,P | EP 4 254 546 A1 (SAMSUNG SDI CO LTD [KR])<br>4 October 2023 (2023-10-04)<br>* paragraphs [0001], [0055], [0073],<br>[0074], [0105], [0108] - [0117],<br>[0119]; examples 1-6; table 1 * | 1-15 | ADD.<br>H01M10/0525<br>H01M4/02 |
| A | CN 111 916 637 A (JIANGSU HOUSHENG NEW<br>ENERGY TECH CO LTD)<br>10 November 2020 (2020-11-10)<br>* paragraphs [0022] - [0030]; example 1 * | 1-15 | |

TECHNICAL FIELDS
SEARCHED (IPC)

H01M
C08K

The present search report has been drawn up for all claims

| Place of search | Date of completion of the search | Examiner |
|---|---|---|
| Munich | 19 June 2024 | Lavorenti, Marek |

EPO FORM 1503 03.82 (P04C01)

## ANNEX TO THE EUROPEAN SEARCH REPORT
## ON EUROPEAN PATENT APPLICATION NO.

EP 24 15 2704

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2024

| Patent document cited in search report | | Publication date | Patent family member(s) | | Publication date |
|---|---|---|---|---|---|
| EP 3675230 | A1 | 01-07-2020 | CN | 111033803 A | 17-04-2020 |
| | | | EP | 3675230 A1 | 01-07-2020 |
| | | | KR | 20190130977 A | 25-11-2019 |
| | | | US | 2020168877 A1 | 28-05-2020 |
| | | | WO | 2019221490 A1 | 21-11-2019 |
| EP 4254546 | A1 | 04-10-2023 | EP | 4254546 A1 | 04-10-2023 |
| | | | US | 2023352659 A1 | 02-11-2023 |
| CN 111916637 | A | 10-11-2020 | NONE | | |

EPO FORM P0459

For more details about this annex : see Official Journal of the European Patent Office, No. 12/82

**EP 4 407 705 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011159484 A
- JP 2016162528 A
- JP 2011258481 A